# EUROPEAN PATENT APPLICATION

(11) **EP 4 786 872 A1**
(43) Date of publication of application: **05.08.2026**
(21) Application number: 25720624.3
(22) Date of filing: 19.02.2025
(51) Int. Cl.: F24F 3/16, F24F 8/30, B03C 3/41, B03C 3/34, B03C 3/08, B03C 3/12, B03C 3/47, B03C 3/86

(54) **HIGH-VOLTAGE ELECTROSTATIC AIR PURIFICATION MODULE AND ION WIND AIR PURIFIER**

(30) Priority: 13.12.2024 CN 202423092172 U
(71) Applicant: Guangdong Tongyuan Electric Appliance Co., Ltd, Shenzhen, Guangdong 518000 (CN)
(72) Inventor: WU, Huasong, Shenzhen, Guangdong 518000 (CN)
(74) Representative: Murgitroyd & Company
(86) International application number: PCT/CN2025/077998
(87) International publication number: WO 2026/123461

(57) **Abstract**

The present application discloses a high-voltage electrostatic type air purification module and an ionic wind air purifier. The high-voltage electrostatic type air purification module is applied to the ionic wind air purifier, and includes a power source, an emission net equipped with a metal wire, and a collection net equipped with a dust collecting plate. The emission net and the collection net are arranged parallel to each other, and a distance between the two is within a preset range of movement. The power source is used to power the metal wire and the dust collecting plate. When the wind output volume of the ionic wind air purifier is set to a first preset value, a voltage value of the power source is within a preset voltage range, and is in direct proportional relationship with the distance between the emission net and the collection net.

## Description

### Technical Field

The present application relates to the technical field of ionic wind air purifiers, in particular a high-voltage electrostatic type air purification module and an ionic wind air purifier.

### Background Technology

The working principle of the electrostatic dust removal type ionic wind air purifier is mainly to form corona discharge through a high-voltage electric field, which produces ionic wind and avalanche effect, so that air flows in from a corona electrode and flows out from a dust collecting electrode. As a result, dust and bacteria are adsorbed on a dust collecting plate to achieve the effect of dust removal, sterilization and air purification.

The shortcoming of the existing electrostatic dust removal type ionic wind air purifiers is that they only rely on their own generated ionic wind having low wind speed and low wind pressure. The fresh air delivery range is limited, and the purification effect per unit time is limited. By simply increasing the voltage, the wind will be ionized, and ozone and nitrogen oxides will be generated. This instead affects the purification effect.

### Content of the Application

In order to overcome the shortcoming of the prior art, the present application provides a high-voltage electrostatic type air purification module and an ionic wind air purifier.

A high-voltage electrostatic type air purification module, which is applied to an ionic wind air purifier, includes a power source, an emission net equipped with a metal wire, and a collection net equipped with a dust collecting plate. The emission net and the collection net are arranged parallel to each other, and the distance between the two is within a preset range of movement. The power source is used to power the metal wire and the dust collecting plate. When the wind output volume of the ionic wind air purifier is set to a first preset value, a voltage value of the power source is within a preset voltage range and is in direct proportional relationship with the distance between the emission net and the collection net. The preset range of movement is between 5 mm and 200 mm, and the preset voltage range is between 15000V and 43000V.

An ionic wind air purifier includes a main body and the above-mentioned high-voltage electrostatic type air purification module. The emission net and the collection net are both mounted on the main body.

The present application provides a high-voltage electrostatic type air purification module and an ionic wind air purifier. The spacing distance between the emission net and collection net can be flexibly set within an adjustment range of the power supply voltage according to the demand of air output. This solves the problem of the generation of ozone and nitrogen oxides by unilaterally increasing the voltage in the prior art. The ionic wind air purifier based on this high-voltage electrostatic type air purification module has a more flexible design to improve the wind speed and wind pressure, and achieve better air purification results.

### Description of the Drawings

Fig. 1 is a perspective view of the high-voltage electrostatic type air purification module in an embodiment of the present application;
Fig. 2 is a main structural diagram of the ionic wind air purifier in an embodiment of the present application;
Fig. 3 is another main structural diagram of the ionic wind air purifier in an embodiment of the present application;
Fig. 4 is an explosion view of the main structure of the ionic wind air purifier in an embodiment of the present application;
Fig. 5 is an enlarged view of an ejector pin assembly in an embodiment of the present application;
Fig. 6 is an enlarged view of a catch assembly in an embodiment of the present application.

The symbols in the drawings of the specification are as follows:
1, emission net; 11, metal wire; 12, wire frame body; 13, anti-high-voltage quick female connector; 14, spring bracket; 15, emission net front cover; 16, emission net silicone sleeve; 2, collection net; 21, dust collecting plate; 22, bottom case; 23, opening slot; 24, conductive metal sheet; 25, protrusion; 26, collection net front cover; 3, ejector pin assembly; 31, insulation cover; 32, support; 33, metal ejector pin; 4, main body; 5, L-shaped catch; 51, magnetic press member; 52, anti-detachment projection; 6, male head; 7, female head; 8, module compartment body.

### Detailed Embodiments

In order to make the technical problem to be solved, the technical solution and the beneficial effect of the present application more clearly understood, the present application is further described in detail below in conjunction with the accompanying drawings and embodiments. It should be understood that the specific embodiments described herein are only used to explain the present application and are not intended to limit the present application.

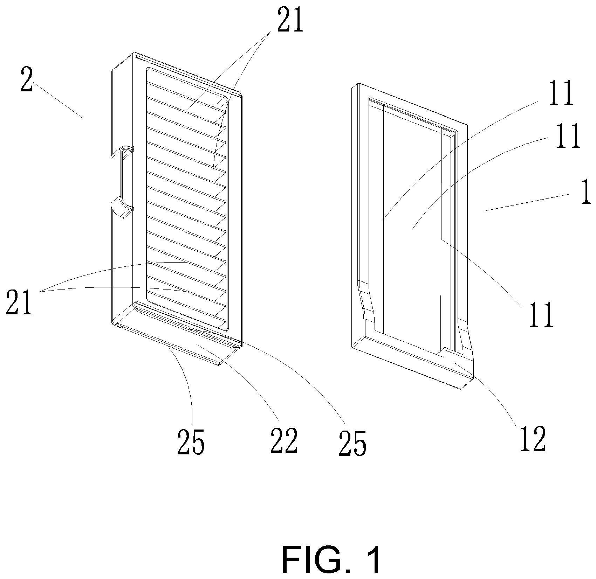

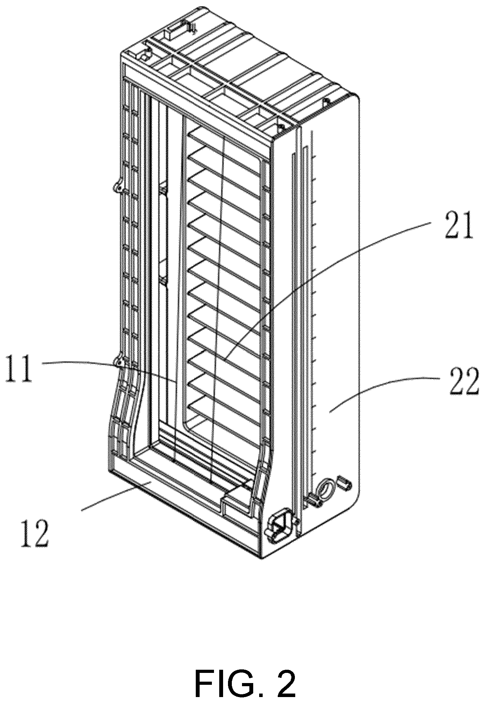

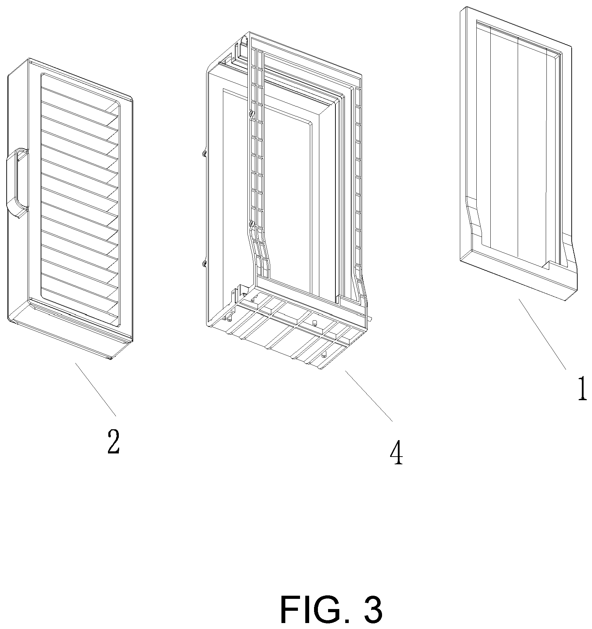

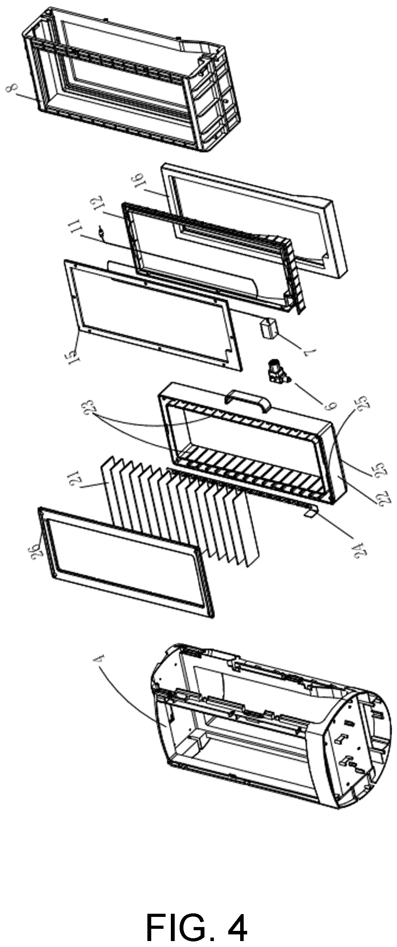

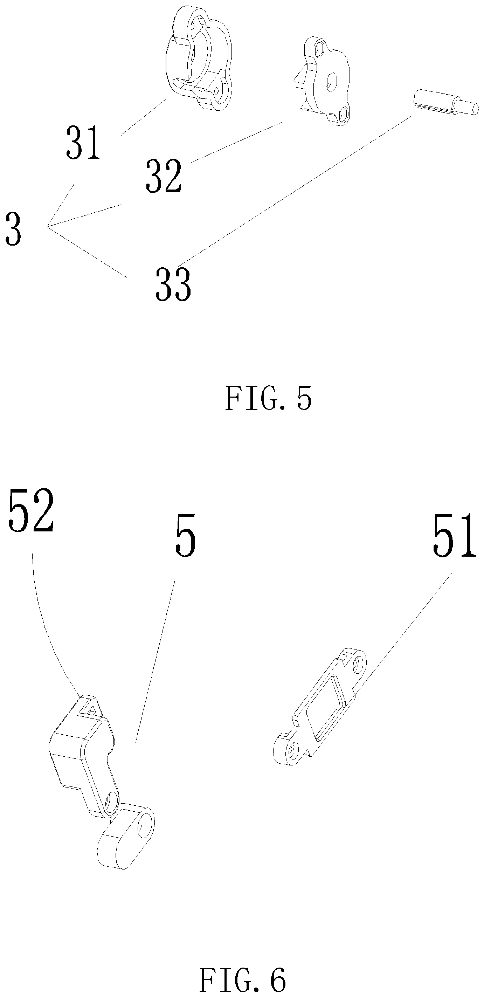

A high-voltage electrostatic type air purification module and an ionic wind air purifier are provided. As shown in Figs. 1-6, the high-voltage electrostatic type air purification module includes a power source, an emission net 1 equipped with a metal wire 11, and a collection net 2 equipped with a dust collecting plate 21. The emission net and the collection net are arranged parallel to each other. The distance between the two is within a preset range of movement. The power source is used to power the metal wire and the dust collecting plate. When the wind output volume of the ionic wind air purifier is set to a first preset value, a voltage value of the power source is within a preset voltage range and is in direct proportional relationship with the distance between the emission net and the collection net. The preset range of movement is between 5 mm and 200 mm, and the preset voltage range is between 15000V and 43000V.

Among them, the emission net corresponds to a positive electrode, and the collection net corresponds to a negative electrode. When energized, a corona discharge is formed on the metal wire (also called an emitting wire) on the emission net which generates ionic wind, and the wind flows out through the dust collecting plate on the collection net.

Specifically, the first preset value of the wind output volume is set to 0.8 meter/second. When the power supply voltage is 24000V, the optimal distance between the emission net and the collection net, i.e., between the metal wire and the dust collecting plate is 38 mm. When the power supply voltage is 26000V, the optimal distance between the metal wire and the dust collecting plate is 45 mm. When the power supply voltage is 28000V, the optimal distance between the metal wire and the dust collecting plate is 51 mm. When the power supply voltage is 30000V, the optimal distance between the metal wire and the dust collecting plate is 58 mm. Since the high-voltage electrostatic type air purification module is based on non-powered wind generation, the volume of the wind is directly related to the voltage magnitude and the distance between the metal wire and the dust collecting plate. That is, the voltage value of the power supply within the preset voltage range is directly proportional to the distance between the emission net and the collection net. The greater the distance between the emission net and the collection net, the higher the voltage requirement; and vice versa, the smaller the distance, the smaller the voltage requirement. The range of movement between the metal wire and the dust collecting plate is between 5 mm and 200 mm, and the voltage range can be between 15000V and 43000V.

Furthermore, the emission net includes a wire frame body 12. The metal wire is a single wire. It is woven into a wire net as a whole in a first preset shape and mounted on the wire frame body. There are multiple wires in the existing emission nets. This is not only cumbersome and complex for point-to-point installation, but also more costly. In the present embodiment, the metal wire is provided as one whole strand. If the metal wire is formed around mounting points or tracks on the emission net in an S-shape or other shapes, the installation can be completed by fixing two ends of the wire respectively. The installation is simple and efficient. This does not only save the costs for processing the wire, but also save the conductive components.

Furthermore, the collection net includes a bottom case 22. The dust collecting plate's quantity is one piece, and is in the shape of a metal strip. The metal strip-shaped dust collecting plate is as a whole in a second preset shape and is mounted on the bottom case. In the present embodiment, which is similar to the embodiment of a single metal wire, the existing plurality of dust collecting plates are improved to form into the shape of a whole metal strip and assembled in an S-shape or other shapes. It is not only easy to install, but it also saves costs.

Furthermore, the dust collecting plate may include a plurality of dust collecting plates, each of the plurality of dust collecting plates is arranged horizontally, and the plurality of dust collecting plates are spaced upwardly and downwardly apart from each other. The metal wire may consist of a plurality of metal wires, each of the plurality of metal wires is arranged vertically, and the plurality of metal wires are spaced left and right apart from each other. That is, the metal wires are arranged perpendicular to the dust collecting plates at 90°.

Furthermore, the emission net includes the wire frame body 12 and an emission net front cover 15. An emission net silicone sleeve 16 is provided in the emission net front cover 15. The wire frame body may be made of plastic material. The wire frame body is provided with an anti-high-voltage quick female connector 13 and a spring bracket 14. One end of the metal wire is connected to the anti-high-voltage quick female connector, and another end is connected to the spring bracket through a spring. A groove for accommodating the metal wire without contacting the metal wire is provided on the wire frame body corresponding to a wire outlet of the metal wire.

In the present embodiment, one end of the metal wire is connected to a female head, and the metal wire is wound several turns around the tracks of the wire frame body to form a wire net. The other end of the metal wire is connected to the spring bracket by a spring. Under the action of the spring extension force, the metal wire is tightened. This solves the problems of slow wire installation process and loose wire. At the same time, since the metal wire will release a large amount of ions during operation, the ions cannot move quickly and can accumulate, thereby accelerating oxidation of the metal wire, forming a fractured oxidation ring, and making the metal wire easy to break. The groove at the wire outlet is much larger than the metal wire, so that the released ions can move quickly and do not accumulate. This ensures that the metal wire is not easy to break.

Furthermore, the collection net includes the bottom case 22 and a collection net front cover 26. A plurality of opening slots 23 are provided on the bottom case, and a conductive metal sheet 24 is provided in the bottom case. The dust collecting plate may consist of a plurality of arched metal sheets. The plurality of arched metal sheets are respectively inserted into the opening slots and are in contact with the conductive metal sheet. In the present embodiment, the opening slots facilitate quick assembly of the arched metal sheets. When the arched metal sheets are inserted, they are electrically connected with the conductive metal sheet. It plays the role of quickly assembling the collection net, and saving time and labor.

Furthermore, an upper surface or a lower surface of the collection net is provided with a protrusion 25, and the protrusion may be in the shape of a dot or a strip. When the collection net is assembled, its upper or lower surface will be in contact with the body of the air purifier. For a surface-to-surface contact, resistance is large when sliding. Therefore, it is changed to a point-to-surface contact through the protrusion, so that resistance during sliding is reduced, and the tightness during insertion and removal of the collection net is made appropriate. At the same time, the conductivity of the main body is reduced due to the reduction of the contact surface between the collection net and the main body. The protrusion may include, but is not limited to, a protruded point or a protruded strip, such as a prismatic strip.

Furthermore, the collection net includes an ejector pin assembly 3. The ejector pin assembly includes an insulating cover 31, a support 32, and a metal ejector pin 33 provided on the support. One end of the metal ejector pin is fixed to a power cord through a nut, and another end is in contact with the conductive metal sheet through a spring. The insulating cover is mounted on the nut and the metal ejector pin is fixed. In the present embodiment, the metal ejector pin is installed in the support. One end of the metal ejector pin is fixed to a power cord by a nut, and another end makes contact with the collection net's metal under the action of a spring. An upper end of the nut is provided with the ejector pin insulating cover so as to fix the metal ejector pin on the main body. This design addresses the issue of enabling the collection net to be quickly connected to the power source without obstacles. This ensures that there is no electrical leakage, thereby ensuring safe machine operation.

An ionic wind air purifier includes a main body 4 and the above-mentioned high-voltage electrostatic type air purification module. The emission net and the collection net are both mounted on the main body.

Furthermore, two L-shaped catches 5 are provided on the main body: an upper catch and a lower catch. One end of each L-shaped catch is locked to the main body through a magnetic press member 51, and another end is provided with an anti-detachment projection 52. There are grooves opened in corresponding catching points on the main body. The anti-detachment projections prevent detachment of the collection net after the collection net is mounted on the main body. In this embodiment, the catches are mechanical parts that prevent the collection net from falling out. When the collection net is installed in the main body, the catches are pressed into the catching grooves respectively. Under the action of the protrusion, the catches are firmly engaged and the collection net is fixed in the main body. The design of these catches is simple, easy to assemble, and the effect is obvious. They are simple and essential.

Furthermore, a male head 6 is provided on the main body, a female head 7 matching the male head is provided on the emission net. When the emission net is mounted on the main body, the male head and the female head are connected and fixed. In the present embodiment, since the emission net is equipped with a female head and the main body is equipped with a male head, during assembly, just align the female head provided on one side of the emission net with the male head on the main body, and push it in place with force. This is simple and convenient.

Furthermore, the ionic wind air purifier further includes a front housing, a left cover, a right cover, a rear cover, and a base for enclosing the main body 4. It also includes a module compartment body 8 for facilitating the assembly of the emission net and the collection net. It further includes a light strip and a light panel for showing the operating status. It further includes a screen bracket for mounting a display screen, which is convenient for viewing the lens of the display screen. It also includes rollers mounted on the lower edge of the base for movement of the device.

Furthermore, a TVOC sensor in the ionic wind air purifier is provided with a silicone protective sleeve. The silicone protective sleeve prevents the exposed board of the TVOC sensor from being damaged under static electricity. This greatly extends the life of the sensor.

The foregoing is an elaboration of the technical scheme of the present application and is used to help understand the present application. However, the implementation of the present application is not limited by the above-mentioned embodiments. Any alteration, modification, substitution, combination, or simplification not departing from the principles of the present application shall be an equivalent substitution and shall be included in the scope of protection of the present application.

## Claims

1. A high-voltage electrostatic type air purification module, **characterized in that** the high-voltage electrostatic type air purification module is applied to an ionic wind air purifier; and comprises a power source, an emission net equipped with a metal wire, and a collection net equipped with a dust collecting plate; the emission net and the collection net are arranged parallel to each other, and a distance between the two is within a preset range of movement; the power source is used to power the metal wire and the dust collecting plate; when a wind output volume of the ionic wind air purifier is set to a first preset value, a voltage value of the power source is within a preset voltage range and is in direct proportional relationship with the distance between the emission net and the collection net; wherein the preset range of movement is between 5 mm and 200 mm; and the preset voltage range is between 15000V and 43000V.

2. The high-voltage electrostatic type air purification module as claimed in claim 1, **characterized in that** the emission net includes a wire frame body; the metal wire is a single strand, the metal wire is woven into a wire net in a first preset shape as a whole, and is mounted on the wire frame body.

3. The high-voltage electrostatic type air purification module as claimed in claim 1, **characterized in that** the collection net includes a bottom case; the dust collecting plate's quantity is one piece, and is in a shape of a metal strip; the metal strip-shaped dust collecting plate is as a whole in a second preset shape and is mounted on the bottom case.

4. The high-voltage electrostatic type air purification module as claimed in claim 1, **characterized in that** the dust collecting plate comprises a plurality of dust collecting plates, each of the plurality of dust collecting plates is arranged horizontally, and the plurality of dust collecting plates are spaced upwardly and downwardly apart from each other; the metal wire comprises a plurality of metal wires, each of the plurality of metal wires is arranged vertically, and the plurality of metal wires are spaced left and right apart from each other.

5. The high-voltage electrostatic type air purification module as claimed in claim 1, **characterized in that** the emission net comprises a wire frame body, the wire frame body is provided with an anti-high-voltage quick female connector and a spring bracket; one end of the metal wire is connected to the anti-high-voltage quick female connector, and another end is connected to the spring bracket through a spring; a groove for accommodating the metal wire without contacting the metal wire is provided on the wire frame body corresponding to a wire outlet of the metal wire.

6. The high-voltage electrostatic type air purification module as claimed in claim 1, **characterized in that** the collection net comprises a bottom case; a plurality of opening slots are provided on the bottom case, and a conductive metal sheet is provided inside the bottom case; the dust collecting plate comprises a plurality of arched metal sheets; the plurality of arched metal sheets are respectively inserted into the plurality of opening slots, and are in contact with the conductive metal sheet.

7. The high-voltage electrostatic type air purification module as claimed in claim 1, **characterized in that** an upper surface or a lower surface of the collection net is provided with a protrusion, and the protrusion is in the shape of a dot or a strip.

8. The high-voltage electrostatic type air purification module as claimed in claim 6, **characterized in that** the collection net comprises an ejector pin assembly, the ejector pin assembly comprises an insulating cover, a support, and a metal ejector pin provided on the support; one end of the metal ejector pin is fixed to a power cord through a nut, and another end is in contact with the conductive metal sheet through a spring; the insulating cover is mounted on the nut and the metal ejector pin is fixed.

9. An ionic wind air purifier, **characterized in that** it comprises a main body and the high-voltage electrostatic type air purification module as claimed in claim 1; the emission net and the collection net are both mounted on the main body.

10. The ionic wind air purifier as claimed in claim 9, **characterized in that** an L-shaped catch is provided on the main body, one end of the L-shaped catch is locked to the main body, and another end is provided with an anti-detachment projection, the anti-detachment projection prevents detachment of the collection net after the collection net is mounted on the main body; or a male head is provided on the main body, and a female head matching the male head is provided on the emission net, when the emission net is mounted on the main body, the male head and the female head are connected and fixed.
